# EUROPÄISCHE PATENTSCHRIFT

(11) **EP 1 650 127 B1**
(45) Veröffentlichungstag und Bekanntmachung des Hinweises auf die Patenterteilung: **23.07.2008**
(21) Anmeldenummer: 05022502.8
(22) Anmeldetag: 14.10.2005
(51) Int. Cl.: B60Q 3/02, B64D 11/00, F21S 8/00

(54) **Beleuchtungseinheit für Flugzeuge**
Illumination unit for aircraft
Unité d'éclairage pour aéronefs

(30) Priorität: 20.10.2004 DE 102004051146; 20.10.2004 US 620376 P
(43) Veröffentlichungstag der Anmeldung: 26.04.2006
(73) Patentinhaber: Airbus Deutschland GmbH, 21129 Hamburg (DE)
(72) Erfinder: Heym, Detlef, 28832 Achim (DE); Kohlmeier-Beckmann, Carsten, 21614 Buxtehude (DE)
(74) Vertreter: Dilg, Andreas

(56) Entgegenhaltungen:
- EP-A- 1 425 990
- DE-A1- 10 231 324
- JP-A- 5 058 287
- US-A1- 5 485 145
- US-A1- 2002 041 144

## Beschreibung

Die vorliegende Erfindung betrifft Beleuchtungen für Flugzeuge. Insbesondere betrifft die vorliegende Erfindung eine Beleuchtungseinheit für ein Flugzeug, ein Flugzeug, umfassend eine entsprechende Beleuchtungseinheit und die Verwendung einer entsprechenden Beleuchtungseinheit in einem Flugzeug.

In heutigen Passagierflugzeugen werden als Allgemeinbeleuchtung zum großen Teil Leuchtstofflampen in Röhren verwendet. Weiterhin werden zur Darstellung einer bestimmten Information in heutigen Passagierflugzeugen sog. "Signs" verwendet, welche die Information als Schrift oder Piktogramm wiedergeben. Hierbei handelt es sich beispielsweise um Schilder oder Leuchttafeln für die Wiedergabe von Befehlen oder Warnhinweisen, wie beispielsweise "No smoking" oder "Fasten seat belt". Alle diese Beleuchtungseinrichtungen weisen den Nachteil auf, dass sie eine relativ große Einbautiefe benötigen. Der Einbau ist somit nicht an jeder beliebigen Fläche möglich, da oft der Platz dahinter nicht für eine entsprechende Installation ausreicht. Wegen des zumeist verdeckten Einbaus ist weiterhin oft nur ein Bruchteil der bereitgestellten Lichtenergie, welche zum großen Teil ungenutzt nach hinten oder seitwärts abgestrahlt wird, nutzbar.

Die EP 1 425 990, die alle Merkmale des Oberbegriffs des unabhängigen Anspruchs 1 offenbart, beschreibt ein Einrichtungselement mit selbstleuchtenden Sichtflächen und ein Herstellungsverfahren.

Die DE 102 31 324 beschreibt eine Innenleuchte für Fahrzeuge.

Die JP 05 058287 beschreibt eine Informationsanzeigevorrichtung.

Die US 2002/041144 beschreibt eine Fluoreszenzlampe.

Die US 5,485,145 beschreibt eine elektrolumineszente Anzeigevorrichtung.

Es ist eine Aufgabe der vorliegenden Erfindung, eine verbesserte Beleuchtungseinheit für Flugzeuge bereitzustellen.

Gemäß einem Ausführungsbeispiel der vorliegenden Erfindung, wie in Anspruch 1 angegeben, wird die obige Aufgabe mittels einer Beleuchtungseinheit für Flugzeuge gelöst, umfassend eine zweidimensionale Lichtquelle, eine zumindest teilweise lichtdurchlässige Blende und ein Befestigungsmittel, wobei die Lichtquelle über das Befestigungsmittel mit der Blende verbunden ist und wobei die Lichtquelle hinter der Blende angeordnet ist und die Blende zumindest teilweise durchleuchtet.

Die zumindest teilweise lichtdurchlässige Blende ist als Inneneinrichtungselement einer Flugzeugkabine ausgeführt, wobei das Inneneinrichtungselement ausgewählt ist aus der Gruppe umfassend Wandverkleidung, Fenster-Paneele, Seiten-Paneele, Deckenverkleidung und Gepäckfach.

Durch die erfindungsgemäße Ausgestaltung der Beleuchtungseinheit können nun auch Flächen für deren Einbau genutzt werden, welche in der Tiefe so stark begrenzt sind, dass andere (konventionelle) Leuchtstofflampen keinen Platz finden. Vorteilhafterweise ermöglicht die Blende, welche die Lichtquelle teilweise abschirmen kann, die Darstellung von Informationen, welche von den Flugpassagieren aufgenommen werden können. Durch die flächige Ausgestaltung der erfindungsgemäßen Beleuchtungseinheit ist es möglich, große Beleuchtungs- oder Informationsflächen zu erzeugen, welche beispielsweise in einer Seitenwand der Flugzeugkabine integriert sind.

Vorteilhafterweise wird somit eine Beleuchtungseinheit bereitgestellt, welche als Blende ein Inneneinrichtungselement der Flugzeugkabine aufweist, so dass bei Installation des Inneneinrichtungselements in die Flugzeugkabine bereits ein Einbau der Beleuchtungseinheit in das Flugzeug ausgeführt wird. Dies minimiert den zusätzlichen Installationsaufwand und spart somit Kosten. Weiterhin ist keine zusätzliche Blende vorgesehen, wodurch Platz- und Materialaufwand eingespart werden können.

Gemäß einem weiteren Ausführungsbeispiel der vorliegenden Erfindung, wie in Anspruch 2 angegeben, ist die Lichtquelle als quecksilberfreie Entladungslampe ausgeführt.

Vorteilhafterweise wird somit eine Beleuchtungseinheit bereitgestellt, welche sich durch hohe Leuchtdichte, hohe Leuchtdichtehomogenität, hohe Farbqualität, hohe Lebensdauer und Umweltverträglichkeit auszeichnet.

Gemäß einem weiteren Ausführungsbeispiel der vorliegenden Erfindung, wie in Anspruch 3 angegeben, weist die Lichtquelle einen Befestigungsbereich mit einer Aussparung zur Befestigung der Lichtquelle an der zumindest teilweise lichtdurchlässigen Blende mittels dem Befestigungsmittel auf, wobei das Befestigungsmittel als Schraube, Niete, selbstverriegelnder Steckbolzen oder Clip ausgeführt ist.

Vorteilhafterweise ermöglicht dies eine einfache Montage der Lichtquelle an der Blende.

Gemäß einem weiteren Ausführungsbeispiel der vorliegenden Erfindung, wie in Anspruch 4 angegeben, weist die zumindest teilweise lichtdurchlässige Blende eine Ausnehmung auf, wobei die Ausnehmung zumindest teilweise mit einem transparenten, mechanisch widerstandsfähigen Material gefüllt ist.

Vorteilhafterweise wird somit eine Beleuchtungseinheit bereitgestellt, deren Lichtquelle durch die Blende vor mechanischer Beschädigung oder Verunreinigung geschützt ist, wobei das transparente Material zur Abdeckung der Lichtquelle eine derarte Form aufweisen kann, dass hierdurch Informationen darstellbar sind.

Gemäß einem weiteren Ausführungsbeispiel der vorliegenden Erfindung, wie in Anspruch 5 angegeben, ist das transparente Material ausgewählt aus der Gruppe umfassend Kunststoff, Plexiglas und Glas. Hier handelt es sich um robuste, leicht zu verarbeitende Materialien, welche ein hohes Maß an Funktionalität aufweisen. Durch die Kombination von durchsichtigen und undurchsichtigen Materialien lassen sich innovative Designelemente und Informationselemente in der Kabine erzeugen.

Gemäß einem weiteren Ausführungsbeispiel der vorliegenden Erfindung, wie in Anspruch 6 angegeben, umfasst die Blende ein Schutzgitter oder eine Schutzabdeckung zum Schutz der zweidimensionalen Lichtquelle vor mechanischer Beschädigung.

Vorteilhafterweise wird somit durch das Schutzgitter oder die Schutzabdeckung ein zusätzlicher Schutz der Lichtquelle erreicht, welcher insbesondere beim Einbau der Beleuchtungseinheit in den Frachtraum des Flugzeugs von Vorteil ist.

Gemäß einem weiteren Ausführungsbeispiel der vorliegenden Erfindung, wie in Anspruch 7 angegeben, ist die Ausnehmung der Blende zur Aufnahme eines Diffusors, eines Strahlungsfilters oder einer Projektionsoptik ausgeführt, wobei die Projektionsoptik zumindest eine Linse aufweist.

Hierdurch wird es ermöglicht, diffuses oder gefiltertes Licht zur Beleuchtung der Kabine bereitzustellen oder aber auch die Lichtstrahlen gezielt auf eine entsprechende Projektionsfläche zu projizieren. Hierdurch kann beispielsweise ein indirektes Informationsanzeigesystem in Form der Beleuchtungseinheit bereitgestellt werden, durch welches Informationen auf eine Projektionsfläche projizierbar sind.

Gemäß einem weiteren Ausführungsbeispiel der vorliegenden Erfindung, wie in Anspruch 8 angegeben, ist die Ausnehmung der Blende zur Aufnahme eines Flüssigkristall-Displays ausgeführt.

Hierdurch ist es beispielweise möglich, dynamische Informationen durch die Beleuchtungseinheit darzustellen.

Gemäß einem weiteren Ausführungsbeispiel der vorliegenden Erfindung, wie in Anspruch 9 angegeben, weist die Beleuchtungseinheit einen Datenport auf, über welchen das Flüssigkristall-Display extern ansteuerbar ist, wobei der Beleuchtungseinheit über den Datenport Displaydaten übermittelbar sind und wobei über die übermittelten Displaydaten das Flüssigkristall-Display steuerbar ist.

Somit kann das Flüssigkristall-Display beispielsweise von einem externen Steuerpult aus bedient werden. Vorteilhaft können somit extern entsprechende Steuerbefehle an das Flüssigkristall-Display und somit an die gesamte Beleuchtungseinheit abgegeben werden, welche in der Folge dann zu einer entsprechenden Informationsanzeige führen. Dies führt zu einer Flexibilität hinsichtlich der dargestellten Informationen oder auch Beleuchtungsfarben, mit welchen die individuellen Fluggäste bedient werden.

Gemäß einem weiteren Ausführungsbeispiel der vorliegenden Erfindung, wie in Anspruch 10 angegeben, sind über das Flüssigkristall-Display Informationen visualisierbar ausgewählt aus der Gruppe bestehend aus statischer Information, dynamischer Information, Sitzreiheninformation, Sitzplatzinformation, Warninformation, Verbotinformation, Fluginformation, Fluchtweginformation und Unterhaltungsinformation.

Beispielsweise kann somit ein Sonnenaufgang, ein Sternenhimmel, ein Airline-Logo oder aber auch Werbung dargestellt werden. Vorteilhaft kann damit beispielsweise eine Beleuchtungseinheit angegeben werden, welche zu einem gegebenen Zeitpunkt dem Fluggast Informationen bezüglich einer entsprechenden Sitzreihe, vor der er sich gerade befindet, oder aber auch Informationen bezüglich eines bestimmten Sitzplatzes, welchen er gerade sucht, bereitstellt. Weiterhin kann die Beleuchtungseinheit zu einem gegebenen Zeitpunkt Warninformation, beispielsweise in Form eines Anschnallsignals, bereitstellen oder aber im Fall einer Notsituation den Weg zum nächsten Notausgang weisen. Weiterhin ist es auch möglich, dass die Beleuchtungseinheit visuelle Informationen zur Unterhaltung der Fluggäste darstellt, wie beispielsweise Filme oder aber auch einfach nur entspannende Muster, Formen, Figuren in verschiedenen Farben und Bewegungsabläufen.

Vorteilhafterweise ist somit ein äußerst flexibles, individuell programmierbares, ansteuerbares und bedienbares Beleuchtungssystem angegeben, welches auf entsprechende Anforderungen und Situationen individuell reagieren kann.

Weitere Ausführungsbeispiele der vorliegenden Erfindung ergeben sich aus dem Verwendungsanspruch und dem zusätzlichen unabhängigen Vorrichtungsanspruch.

Im Folgenden werden mit Verweis auf die Figuren bevorzugte Ausführungsbeispiele der vorliegenden Erfindung beschrieben.

Fig. 1 zeigt eine schematische Darstellung einer Beleuchtungseinheit gemäß einem Ausführungsbeispiel der vorliegenden Erfindung.

Fig. 2 zeigt eine schematische Darstellung einer Beleuchtungseinheit gemäß einem weiteren Ausführungsbeispiel der vorliegenden Erfindung.

Fig. 3 zeigt eine schematische Darstellung einer Beleuchtungseinheit mit einem Flüssigkristall-Display und einem Datenport gemäß einem Ausführungsbeispiel der vorliegenden Erfindung.

Fig. 4 zeigt eine schematische Darstellung einer Beleuchtungseinheit mit Projektionslinsen gemäß einem Ausführungsbeispiel der vorliegenden Erfindung.

Fig. 5 zeigt eine schematische Darstellung einer erfindungsgemäßen Beleuchtungseinheit mit einer verspiegelten Blende gemäß einem Ausführungsbeispiel der vorliegenden Erfindung.

Fig. 6 zeigt eine schematische Darstellung einer Beleuchtungseinheit gemäß einem weiteren Ausführungsbeispiel der vorliegenden Erfindung.

Fig. 7 zeigt eine schematische Querschnittsdarstellung eines ersten Abschnitts einer Beleuchtungseinheit mit Schutzgitter gemäß einem Ausführungsbeispiel der vorliegenden Erfindung.

Fig. 8 zeigt eine schematische Querschnittsdarstellung eines zweiten Bereichs der Beleuchtungseinheit von Fig. 7.

In der folgenden Figurenbeschreibung werden für die gleichen oder ähnlichen Elemente die gleichen Bezugsziffern verwendet.

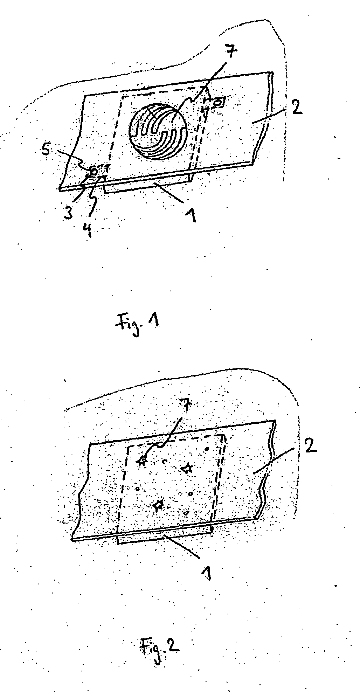

Fig. 1 zeigt eine schematische Darstellung einer Beleuchtungseinheit gemäß einem Ausführungsbeispiel der vorliegenden Erfindung. Wie in Fig. 1 zu erkennen, weist die Beleuchtungseinheit eine zweidimensionale Lichtquelle 1, eine zumindest teilweise lichtdurchlässige Blende 2 und ein Befestigungsmittel 3 auf. Die zweidimensionale Lichtquelle 1 ist über das Befestigungsmittel 3 mit der Blende 2 fest verbunden. Hierfür ist ein Befestigungsbereich 4 vorgesehen, welcher eine Aussparung 5 aufweist. Der Befestigungsbereich 4 ist, wie in Fig. 1 zu erkennen, in Form einer winkelförmigen Anordnung ausgeführt, welche mit der zweidimensionalen Lichtquelle 1 fest verbunden ist. Das Befestigungsmittel 3 ist beispielsweise als Schraube, Niete oder als selbstverriegelnder Steckbolzen ausgeführt. Auch ist es möglich, dass die Lichtquelle 1 mittels eines Clips an die Blende 2 angeclipt wird.

Die Blende 2 ist als Inneneinrichtungselement einer Flugzeugkabine ausgeführt, bei welchem es sich beispielsweise um eine Wandverkleidung, ein Deckenelement oder ein Gepäckfach handelt. Die zweidimensionale Lichtquelle 1 kann beispielsweise in Form einer quecksilberfreien Entladungslampe ausgeführt sein, welche sich durch hohe Leuchtdichte, hohe Leuchtdichtehomogenität, hohe Farbqualität und hohe Lebensdauer auszeichnet. Die Farbtöne, welche von der Lichtquelle 1 ausgestrahlt werden, entsprechen beispielsweise denen der Allgemeinbeleuchtung. Die gesamte Lichtquelle 1 ist hierbei als Einheit austauschbar, weist eine Lambert'sche Strahlercharakteristik auf und ist quecksilberfrei. Somit ist eine überdurchschnittliche Umweltverträglichkeit gewährleistet.

Weiterhin weist die zumindest teilweise lichtdurchlässige Blende 2 eine Ausnehmung 7 auf, welche vom Licht der Lichtquelle 1 durchleuchtbar ist. Durch eine entsprechende Formgebung der Ausnehmung 7 ist es somit möglich, Formen, Muster, Zeichen oder Schrift leuchtend darzustellen.

Fig. 2 zeigt eine schematische Darstellung einer Beleuchtungseinheit gemäß eines weiteren Ausführungsbeispiels der vorliegenden Erfindung. Hierbei sind die Ausnehmungen 7 in Form von sternförmigen Ausschnitten ausgeführt, so dass die Kombination aus Lichtquelle 1 und Blende 2 den Eindruck eines Sternenhimmels vermittelt, welcher bei entsprechender Beleuchtungsstärke und Beleuchtungsfarbe eine angenehme, beruhigende Wirkung auf die Fluggäste erzielen kann.

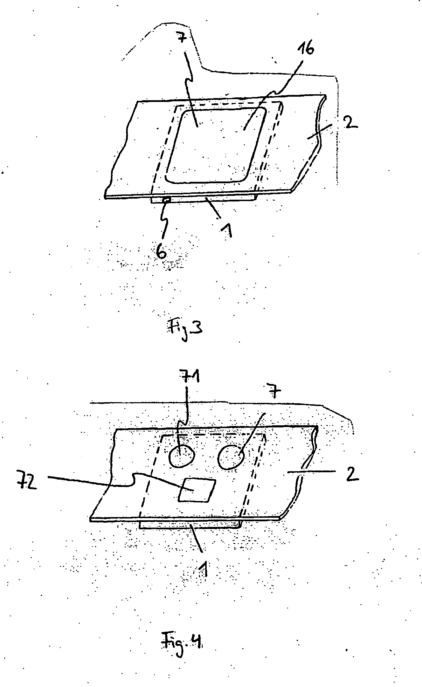

Fig. 3 zeigt eine schematische Darstellung einer Beleuchtungseinheit gemäß eines weiteren Ausführungsbeispiels der vorliegenden Erfindung. Hier ist ein Flüssigkristall-Display 16 in die Ausnehmung 7 der Blende 2 integriert, welches von der Lichtquelle 1 durchleuchtet wird. Über den Datenport 6 ist das Flüssigkristall-Display extern ansteuerbar. Somit sind über den Datenport 6 Displaydaten an die Beleuchtungseinheit übermittelbar, so dass eine Anzeige des Flüssigkristall-Displays 16 extern steuerbar ist.

Auf diese Art und Weise können über das Flüssigkristall-Display 16 Informationen visualisiert werden. Hierbei kann es sich beispielsweise um Informationen bezüglich der entsprechenden Sitzreihe, in deren Nähe die Beleuchtungseinheit angebracht ist, handeln. Weiterhin kann es sich um Informationen bezüglich entsprechender Gefahrensituationen handeln, welche während des Fluges auftreten können. Es kann sich aber auch um ganz normale Fluginformationen, wie beispielsweise die aktuelle Geschwindigkeit des Flugzeugs oder die Reiseflughöhe handeln, um Verbotinformationen, wie beispielsweise ein Rauchverbot, um Fluchtweginformationen oder Informationen zur Unterhaltung der Fluggäste. Durch die erfindungsgemäße Beleuchtungseinheit lassen sich, falls beispielsweise ein Flüssigkristall-Display 16 vorgesehen ist, nicht nur einfache Informationen, welche lediglich ein Bild, Dia, Piktogramm oder einen Schriftzug enthalten, darstellen, sondern auch dynamische Informationen, wie beispielsweise veränderliche Schriftzüge oder Filme. Somit ist es möglich, eine Beleuchtung bereitzustellen, welche neben ihrer Funktion als Helligkeitsspender auch die Möglichkeit bietet, temporäre Anzeigen bereitzustellen, welche beispielsweise Informationen bezüglich einer bestimmten Sitzreihe wiedergeben. Hierbei ist es denkbar, dass die Nummer einer bestimmten Sitzreihe durch die Beleuchtungseinheit (beispielsweise unter Verwendung des Flüssigkristall-Displays 16) wiedergegeben wird und somit das Auffinden des Sitzplatzes beim Einsteigen deutlich erleichtert wird, da die Nummer entsprechend groß und vom Gang aus leicht erkennbar darstellbar ist.

Somit lassen sich durch die Beleuchtungseinheit gut sichtbare Informationen erzeugen, welche auf Wunsch veränderbar sind. Nach dem Ausschalten sind diese Anzeigen unsichtbar.

Fig. 4 zeigt eine schematische Darstellung einer Beleuchtungseinheit gemäß eines weiteren Ausführungsbeispiels der vorliegenden Erfindung. Wie in Fig. 4 zu erkennen, sind in der Blende 2 drei Ausnehmungen 7, 71, 72 vorgesehen. Die Ausnehmungen 7 und 71 sind hierbei zur Aufnahme von Projektionsoptiken ausgeführt (nicht dargestellt in Fig. 4), welche beispielsweise Linsen oder Linsensysteme umfassen. Somit ist es möglich, einen fokussierten Lichtstrahl zu erzeugen, welcher beispielsweise das Lesen in einem Buch erleichtert.

Bei der Ausnehmung 72 handelt es sich beispielsweise um eine Ausnehmung, welche einen Diffusor aufnimmt. Somit ist es möglich, diffuses Licht zu erzeugen.

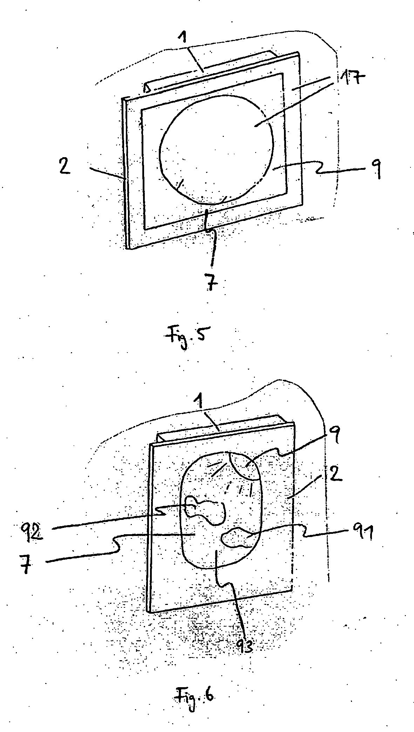

Fig. 5 zeigt eine schematische Darstellung einer Beleuchtungseinheit gemäß eines weiteren Ausführungsbeispiels der vorliegenden Erfindung. Hierbei ist die Ausnehmung 7 der Blende 2 mit einem transparenten Material 9 versehen, bei dem es sich beispielsweise um Kunststoff, Plexiglas oder Glas handelt. Das transparente Material 9 ist hierbei widerstandsfähig und bietet der dahinter liegenden Lichtquelle 1 hinreichenden Schutz vor mechanischer Beschädigung oder Verunreinigung.

Des weiteren ist die Blende 2 in Teilbereichen mit einem spiegelartigen Material 17 versehen. Somit kann die Beleuchtungseinheit beispielsweise als Leuchte in einer Toilettenkabine, wo der Einbauraum durch die Größe der Kabine limitiert ist, verwendet werden. Es handelt sich also um einen halbdurchlässigen beleuchteten Spiegel, welcher beispielsweise in die Seitenverkleidung eines Waschraums oder eines Bordtoilettenraums integriert ist.

Fig. 6 zeigt eine schematische Darstellung einer Beleuchtungseinheit gemäß eines weiteren Ausführungsbeispiels der vorliegenden Erfindung. Die Aussparung 7 weist hierbei mehrere, verschiedenfarbige transparente Materialien 9, 91, 92, 93 auf, welche insgesamt eine Art "Pseudo-Fenster" ausbilden. Die transparenten Materialien 9, 91, 92, 93 stellen hierbei Sonne, Wolken und Himmel dar. Auf diese Art können Kabinenfenster dort simuliert werden, wo wegen Einbauten (z. B. Steigeleitungen der Klimaanlage) kein echtes Kabinenfenster anbringbar ist.

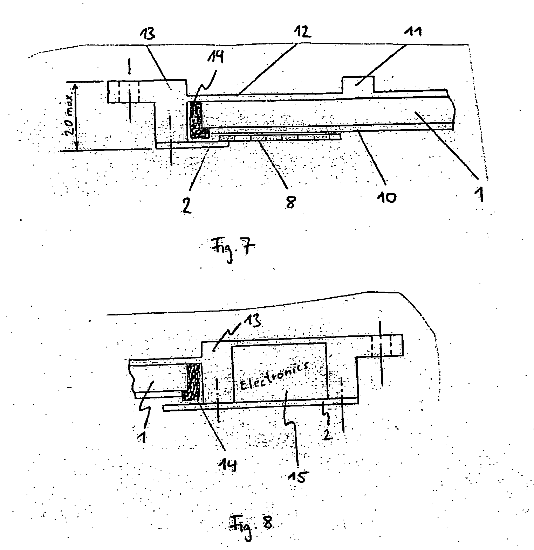

Fig. 7 zeigt eine schematische Querschnittsdarstellung eines ersten Bereichs einer Beleuchtungseinheit gemäß eines weiteren Ausführungsbeispiels der vorliegenden Erfindung. Die in Fig. 7 dargestellte Beleuchtungseinheit weist eine zweidimensionale Lichtquelle 1 und eine Blende 2 auf. Die Blende 2 umfasst ein Schutzgitter 8, welches die dahinter liegende Lichtquelle 1 besonders wirksam vor mechanischer Beschädigung schützt. Die Lichtquelle 1 ist in der Blende 2, welche in Form eines Gehäuses 13 ausgeführt ist, integriert. Auf der Rückseite des Gehäuses 13 befindet sich eine Metallplatte zur Kühlung der Lichtquelle 1, welche über das Distanzstück 11 auf Distanz zur Deckenverkleidung gehalten wird, an welche die Beleuchtungseinheit der Fig. 7 angebracht wird.

Weiterhin ist ein Diffusor 10 vorgesehen, zur Erzeugung diffusen Lichtes.

Fig. 8 zeigt eine schematische Querschnittsdarstellung eines zweiten Bereichs der Beleuchtungseinrichtung aus Fig. 7. Die Lichtquelle 1 weist eine Gummidichtung 14 auf, durch welche ein fester und elastisch gelagerter Sitz der Lichtquelle 1 in dem Gehäuse 13 gewährleistet ist. Weiterhin weist das Gehäuse 13 eine Elektronik 15 auf, über welche die Lichtquelle 1 und ggf. das Flüssigkristall-Display 16 (nicht gezeigt in Fig. 8) angesteuert werden kann.

Somit wird eine Beleuchtungseinheit bereitgestellt, welche im Frachtraum eines Luftfahrzeugs verwendet werden kann, welcher, bedingt durch die Flugzeugstruktur und die Brandschutzforderungen, möglichst glattflächig gestaltet werden muss.

Weiterhin sind auf diese Art und Weise Leuchten in Kücheneinbauten, speziell als Downiight zur gleichmäßigen Beleuchtung der Arbeitsplatte bereitgestellt. Weiterhin kann die vorliegende Erfindung auch als Leuchte in anderen Arbeitsbereichen, wo es auf möglichst geringe Einbautiefe ankommt, verwendet werden. Es sind aber auch Anwendungen als dekorative Leuchte im Kabinenbereich für direkte Beleuchtung oder als dekorative Leuchte im Kabinenbereich für indirekte Beleuchtung, z. B. über flachen, abgehängten Decken, möglich. Weiterhin ist der Einsatz als Allgemeinbeleuchtung in Compartments mit begrenztem Einbauraum, z. B. in Schlafkojen, in Deckenpaneels als Downlight oder als Downlight im Versorgungskanal, vorgesehen.

Die Beleuchtungseinheit kann Farbfilter zur Erzeugung von Effekten in Form von farbigen Filterscheiben vor der Lichtquelle 1 aufweisen. Der Wirkungsgrad hängt hierbei von der gewählten Wellenlänge ab, ist aber mit dem einer Leuchtstofflampe vergleichbar.

Es können Schutzabdeckungen aus lichtdurchlässigem, bruchsicherem Material vorgesehen sein, wie beispielsweise bruchsicherer, lichtdurchlässiger Kunststoff.

Wegen der geringen Einbautiefe lässt sich die vorgeschlagene Beleuchtungseinheit in Gehäuse einbauen, die sowohl für einen Einbau in als auch für eine Montage auf einer Fläche geeignet sind.

Als Schutz vor Glasbruch kann eine geeignete Umschrumpfungsfolie vorgesehen sein, so dass die Beleuchtungseinheit oder Teile der Beleuchtungseinheit von einem lichtdurchlässigen Kunststoff schützend ummantelt werden.

Die Erfindung beschränkt sich in ihrer Ausführung nicht auf die in den Figuren dargestellten bevorzugten Ausfiihrungsformen. Vielmehr ist eine Vielzahl von Varianten denkbar, welche von der dargestellten Lösung und dem erfindungsgemäßen Prinzip auch bei grundsätzlich anders gearteten Ausführungsformen Gebrauch macht.

Ergänzend sei darauf hinzuweisen, dass "umfassend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Beleuchtungseinheit für ein Flugzeug, umfassend:
eine zweidimensionale Lichtquelle (1);
eine zumindest teilweise lichtdurchlässige Blende (2);
ein Befestigungsmittel (3);
wobei die Lichtquelle (1) über das Befestigungsmittel (3) mit der Blende (2) verbunden ist; und
wobei die Lichtquelle (1) hinter der Blende (2) angeordnet ist und die Blende (2) zumindest teilweise durchleuchtet,
**dadurch gekennzeichnet, daß**
die zumindest teilweise lichtdurchlässige Blende (2) als Inneneinrichtungselement einer Flugzeugkabine ausgeführt ist; und
wobei das Inneneinrichtungselement ausgewählt ist aus der Gruppe umfassend Wandverkleidung, Fenster-Paneele, Seiten-Paneele, Deckenverkleidung, und Gepäckfach.

2. Beleuchtungseinheit nach Anspruch 1,
wobei die Lichtquelle (1) als quecksilberfreie Entladungslampe ausgeführt ist.

3. Beleuchtungseinheit nach einem der Ansprüche 1 bis 2,
wobei die Lichtquelle (1) einen Befestigungsbereich (4) mit einer Aussparung (5) zur Befestigung der Lichtquelle (1) an der zumindest teilweise lichtdurchlässigen Blende (2) mittels dem Befestigungsmittel (3) aufweist; und
wobei das Befestigungsmittel (3) als Schraube, Niete, selbstverriegelnder Steckbolzen oder Clip ausgeführt ist.

4. Beleuchtungseinheit nach einem der vorhergehenden Ansprüche,
wobei die zumindest teilweise lichtdurchlässige Blende (2) eine Ausnehmung (7) aufweist; und
wobei die Ausnehmung (7) zumindest teilweise mit einem transparenten, mechanisch widerstandsfähigen Material (9) gefüllt ist.

5. Beleuchtungseinheit nach Anspruch 4,
wobei das transparente Material (9) ausgewählt ist aus der Gruppe umfassend Kunststoff, Plexiglas, und Glas.

6. Beleuchtungseinheit nach einem der vorhergehenden Ansprüche,
wobei die Blende (2) ein Schutzgitter (8) oder eine Schutzabdeckung umfasst, zum Schutz der zweidimensionalen Lichtquelle (1) vor mechanischer Beschädigung.

7. Beleuchtungseinheit nach einem der Ansprüche 4 bis 6,
wobei die Ausnehmung (7) zur Aufnahme eines Diffusors (10), eines Strahlungsfilters, oder einer Projektionsoptik ausgeführt ist; und
wobei die Projektionsoptik zumindest eine Linse aufweist.

8. Beleuchtungseinheit nach einem der Ansprüche 4 bis 7,
wobei die Ausnehmung (7) zur Aufnahme eines Flüssigkristall-Displays (16) ausgeführt ist.

9. Beleuchtungseinheit nach Anspruch 8,
wobei die Beleuchtungseinheit einen Datenport (6) umfasst, über welchen das Flüssigkristall-Display (16) extern ansteuerbar ist;
wobei der Beleuchtungseinheit über den Datenport (6) Displaydaten übermittelbar sind; und
wobei über die übermittelten Displaydaten das Flüssigkristall-Display (16) steuerbar ist.

10. Beleuchtungseinheit nach Anspruch 8 oder 9,
wobei über das Flüssigkristall-Display Informationen visualisierbar sind ausgewählt aus der Gruppe bestehend aus:
statischer Information, dynamischer Information, Sitzreiheninformation, Sitzplatzinformation, Warninformation, Verbotinformation, Fluginformation, Fluchtweginformation, und Unterhaltungsinformation.

11. Flugzeug, umfassend eine Beleuchtungseinheit nach einem der Ansprüche 1 bis 10.

12. Verwendung einer Beleuchtungseinheit nach einem der Ansprüche 1 bis 10 in einem Flugzeug.

## Claims

1. Illumination unit for an aircraft, comprising:
a two-dimensional light source (1),
an at least partially translucent screen (2),
an attachment means (3),
wherein the light source (1) is connected to the screen (2) via the attachment means (3) and
wherein the light source (1) is arranged behind the screen (2) and at least partially transilluminates the screen (2), **characterised in that**
the at least partially translucent screen (2) is embodied as an internal furnishing element of an aircraft cabin and
the internal furnishing element is selected from the group comprising wall panelling, window panels, side panels, ceiling panelling and luggage locker.

2. Illumination unit according to claim 1,
wherein the light source (1) is embodied as a mercury-free discharge lamp.

3. Illumination unit according to any one of claims 1 to 2,
wherein the light source (1) comprises an attachment region (4) with a recess (5) for the attachment of the light source (1) on the at least partially translucent screen (2) by means of the attachment means (3) and
wherein the attachment means (3) is embodied as a screw, rivet, self-locking socket pin or clip.

4. Illumination unit according to any one of the preceding claims,
wherein the at least partially translucent screen (2) comprises a recess (7) and
wherein the recess (7) is at least partially filled with a transparent, mechanically resistant material (9).

5. Illumination unit according to claim 4,
wherein the transparent material (9) is selected from the group comprising plastic, plexiglas, and glass.

6. Illumination unit according to any one of the preceding claims,
wherein the screen (2) comprises a protective grid (8) or a protective cover to protect the two-dimensional light source (1) from mechanical damage.

7. Illumination unit according to any one of claims 4 to 6,
wherein the recess (7) is designed to accommodate a diffuser (10), a radiation filter or a projection optical system and
wherein the projection optical system comprises at least one lens.

8. Illumination unit according to any one of claims 4 to 7,
wherein the recess (7) is designed to accommodate a liquid-crystal display (16).

9. Illumination unit according to claim 8,
wherein the illumination unit comprises a data port (6) via which the liquid-crystal display (16) can be controlled from outside,
wherein display data can be communicated to the illumination unit via the data port (6) and
wherein the liquid-crystal display (16) can be controlled by the communicated display data.

10. Illumination unit according to claim 8 or 9,
whereby the liquid-crystal display is able to visualise information selected from the group comprising:
static information, dynamic information, seating row information, seat information, warning information, prohibition information, flight information, escape route information, and entertainment information.

11. Aircraft, comprising an illumination unit according to any one of claims 1 to 10.

12. Use of an illumination unit according to any one of claims 1 to 10 in an aircraft.

## Revendications

1. Unité d'éclairage pour un avion, comprenant:
une source de lumière en deux dimensions (1);
un écran (2) au moins partiellement perméable à la lumière;
un moyen de fixation (3);
dans laquelle la source de lumière (1) est reliée à l'écran (2) par l'intermédiaire du moyen de fixation (3); et
dans laquelle la source de lumière (1) est disposée derrière l'écran (2) et éclaire au moins partiellement à travers l'écran (2), **caractérisé en ce que**
l'écran (2) au moins partiellement perméable à la lumière est réalisé sous forme d'élément d'aménagement intérieur d'une cabine d'avion; et
dans laquelle l'élément d'aménagement intérieur est choisi parmi le groupe comprenant les revêtements muraux, les panneaux de fenêtres, les panneaux latéraux, le revêtement de plafond et les compartiments à bagages.

2. Unité d'éclairage selon la revendication 1,
dans laquelle la source de lumière (1) est réalisée sous forme de lampe à décharge sans mercure.

3. Unité d'éclairage selon l'une des revendications 1 à 2,
dans laquelle la source de lumière (1) présente une zone de fixation (4) comportant un évidement (5) pour fixer la source de lumière (1) à l'écran (2) perméable au moins partiellement à la lumière, au moyen du moyen de fixation (3); et
dans laquelle le moyen de fixation (3) est réalisé sous forme de vis, de rivet, de boulon à verrouillage automatique ou de clip.

4. Unité d'éclairage selon l'une des revendications précédentes,
dans laquelle l'écran (2) perméable au moins partiellement à la lumière présente un évidement (7); et
dans laquelle l'évidement (7) est rempli au moins partiellement par un matériau transparent (9) résistant mécaniquement.

5. Unité d'éclairage selon la revendication 4,
dans laquelle le matériau transparent (9) est choisi parmi le groupe comprenant le plastique, le plexiglas et le verre.

6. Unité d'éclairage selon l'une des revendications précédentes,
dans laquelle l'écran (2) comprend une grille de protection (8) ou une couverture de protection, pour protéger la source de lumière en deux dimensions (1) de la détérioration mécanique.

7. Unité d'éclairage selon l'une des revendications précédentes 4 à 6,
dans laquelle l'évidement (7) est réalisé pour recevoir un diffuseur (10), un filtre de radiations ou une optique de projection; et
dans laquelle l'optique de projection présente au moins une lentille.

8. Unité d'éclairage selon l'une des revendications 4 à 7,
dans laquelle l'évidement (7) est réalisé pour recevoir un afficheur à cristaux liquides (16).

9. Unité d'éclairage selon la revendication 8,
dans laquelle l'unité d'éclairage comprend un port de données (6), par l'intermédiaire duquel l'afficheur à cristaux liquides (16) peut être piloté de l'extérieur;
dans laquelle des données d'affichage peuvent être transmises à l'unité d'éclairage, par l'intermédiaire du port de données (6); et
dans laquelle l'afficheur à cristaux liquides (16) peut être commandé par les données d'affichage transmises.

10. Unité d'éclairage selon la revendication 8 ou 9,
dans laquelle par l'intermédiaire de l'afficheur à cristaux liquides, peuvent être visualisées des informations choisies parmi le groupe des:
informations statiques, informations dynamiques, informations sur la rangée de siège,
informations sur le siège, informations d'avertissement, informations d'interdiction,
informations de vol, informations sur les issues de secours et informations de divertissement.

11. Avion comprenant une unité d'éclairage selon l'une des revendications 1 à 10.

12. Utilisation d'une unité d'éclairage selon l'une des revendications 1 à 10 dans un avion.
